# FASCICULE DE BREVET EUROPEEN

(11) **EP 1 424 278 B1**
(45) Date de publication et mention de la délivrance du brevet: **22.03.2006**
(21) Numéro de dépôt: 03104364.9
(22) Date de dépôt: 25.11.2003
(51) Int. Cl.: B64C 1/14, B60J 1/16

(54) **Fenêtre de cockpit d'aéronef**
Flugzeugcockpitfenster
Aircraft cockpit window

(30) Priorité: 27.11.2002 FR 0214880
(43) Date de publication de la demande: 02.06.2004
(73) Titulaire: AIRBUS France, 31060 Toulouse (FR)
(72) Inventeur: Pautis, Olivier, 31200, TOULOUSE (FR); Dazet, Francis, 31140, SAINT-ALBAN (FR); Chaumel, Pascal, 31830, PLAISANCE DU TOUCH (FR)
(74) Mandataire: Poulin, Gérard

(56) Documents cités:
- EP-A- 0 521 717
- EP-A- 0 673 820
- FR-A- 879 567
- US-A- 3 050 790
- US-A- 5 769 361

## Description

### DOMAINE TECHNIQUE

L'invention concerne une fenêtre destinée à un cockpit d'aéronef.

De façon plus précise, l'invention concerne une fenêtre latérale de cockpit d'aéronef conçue pour pouvoir être manoeuvrée par un opérateur humain tel que le pilote, sans avoir recours à aucune autre source d'énergie, malgré les contraintes qui sont appliquées sur ladite fenêtre en raison du différentiel de pression entre l'intérieur et l'extérieur de l'avion.

### ETAT DE LA TECHNIQUE ANTERIEURE

Sur les avions existants de la famille "AIRBUS", chaque fenêtre latérale du cockpit comprend une vitre qui est généralement reliée à la structure du cockpit en quatre points. Deux de ces points sont situés en partie basse et les deux autres points sont situés en partie haute. Ces points sont matérialisés par des galets qui coulissent dans des rails haut et bas parallèles entre eux.

Ce montage classique donne satisfaction sur des avions dont les fenêtres sont de formes relativement simples et de dimensions relativement réduites. En revanche, il ne peut pas être utilisé sur des fenêtres de formes complexes, par exemple non développables, car il est hyperstatique. En effet, la vitre d'une telle fenêtre peut se déformer de façon non homogène lorsqu'elle est soumise à des contraintes, cela d'autant plus lorsqu'elle est de grandes dimensions. Pour une fenêtre de ce type, il convient donc d'utiliser un montage isostatique sur la structure de l'avion.

Le document US-A-3 050 790 décrit une fenêtre latérale de cockpit d'aéronef dans laquelle l'encadrement de la vitre est relié à la structure de l'avion en trois points formant une liaison isostatique. Lors de l'ouverture de la vitre, on dégage en premier la partie arrière de l'encadrement avant de faire coulisser celui-ci vers l'arrière.

Toutefois, cette fenêtre connue présente certains inconvénients.

Ainsi, le mécanisme assurant l'ouverture et la fermeture de la vitre ne permet pas de verrouiller l'encadrement de la vitre en position ouverte ou semi-ouverte. Il existe donc un risque pour que la vitre soit animée d'un mouvement de translation dans ses rails, par exemple lors d'un freinage de l'avion sur la piste. Un opérateur qui regarderait à l'extérieur par la fenêtre ouverte peut alors être blessé si le mouvement de translation s'effectue vers l'avant.

Un autre inconvénient de ce mécanisme connu est que, lors de la fermeture de la fenêtre, la partie avant de l'encadrement de la vitre vient s'insérer dans la structure du cockpit selon un mouvement qui engendre des frottements sur les joints. Cela provoque une usure prématurée de ceux-ci.

Par ailleurs, afin de proposer un bon niveau d'ergonomie à l'opérateur, il est souhaitable que celui-ci puisse effectuer toutes les manoeuvres de la fenêtre en agissant sur un organe unique, tel qu'une poignée, regroupant tous les moyens permettant d'actionner la vitre et de la sécuriser dans ses différentes positions. Il est également souhaitable que cet organe soit aisément accessible en toutes positions.

Les liaisons entre la vitre et les rails formant la structure du cockpit sont réalisées classiquement avec des jeux permettant d'absorber des déformations de la vitre dues notamment à des variations de la différence de pression entre l'intérieur et l'extérieur de l'avion. Toutefois, afin d'assurer l'étanchéité à l'air et à l'eau, ces jeux doivent rester inférieurs à des valeurs prédéterminées, dont l'ordre de grandeur est généralement voisin du millimètre. Il en résulte que les rails peuvent être soumis à des contraintes qui risquent de les endommager (apparition de criques, etc.).

Le document US-A-3 050 790 divulgue une fenêtre d'aéronef conforme au préambule de la revendication 1, dans laquelle le pivotement d'une poignée articulée sur le cadre de la fenêtre commande le verrouillage et le déverrouillage dudit cadre par rapport à la structure de cockpit, uniquement lorsque la fenêtre est fermée.

Le document US-A-5 769 361 concerne une fenêtre de cockpit d'aéronef utilisée comme issue de secours accessible de l'extérieur. A cet effet, on ajoute au système classique de manoeuvre de la fenêtre une poignée accessible de l'extérieur, un premier mécanisme reliant cette poignée aux verrous de système de fermeture de la fenêtre et un deuxième mécanisme reliant la poignée à un galet qui agit sur une came du mécanisme de commande classique des verrous.

### EXPOSÉ DE L'INVENTION

L'invention a précisément pour objet une fenêtre de cockpit d'aéronef dont la conception originale lui permet de résoudre au moins en partie les problèmes posés par les fenêtres de l'art antérieur.

Plus précisément, l'invention a pour objet une fenêtre de cockpit d'aéronef assurant notamment un montage isostatique de la vitre sur la structure de l'avion et un maintien en position de la vitre en position ouverte ou semi-fermée.

Conformément à l'invention, ce résultat est obtenu au moyen d'une fenêtre d'aéronef conforme à la revendication 1.

Cet agencement original permet d'assurer un montage isostatique de la vitre sur la structure de cockpit et de commander le verrouillage et le déverrouillage de la vitre ainsi que tous les mouvements de celle-ci en actionnant un organe de manoeuvre unique. L'ergonomie est donc accrue par rapport aux fenêtres de cockpit de l'art antérieur.

Dans un mode de réalisation préféré de l'invention, l'organe de manoeuvre est une poignée articulée sur le cadre et l'organe de déverrouillage est un bouton placé sur la poignée et rappelé élastiquement vers une position de verrouillage.

Avantageusement, la poignée est alors articulée sur le cadre par un axe sensiblement vertical.

Avantageusement encore, la poignée est apte à pivoter vers l'arrière sur le cadre rigide à partir d'une position plaquée contre la vitre.

Dans le mode de réalisation préféré de l'invention, un organe indicateur de non-verrouillage est placé sur la poignée. Plus précisément, cet organe est relié mécaniquement au bouton de façon à faire saillie sur la poignée de manière visible lorsque le bouton occupe une position de déverrouillage.

De préférence, les moyens de guidage comprennent un rail supérieur et un rail inférieur appartenant à la structure de cockpit, un jeu de galets reçu dans le rail supérieur et deux autres jeux de galets reçus dans le rail inférieur, lesdits jeux de galets étant montés sur des leviers, eux-mêmes articulés sur le cadre.

Dans ce cas, l'invention est particulièrement adaptée au cas où le rail supérieur et le rail inférieur forment entre eux un angle non nul au plus égal à environ 5 degrés.

Avantageusement, les moyens de guidage comprennent des moyens aptes à absorber des déformations de la vitre en position fermée et verrouillée.

Selon un premier mode de réalisation, lesdits moyens aptes à absorber des déformations de la vitre comprennent des parties souples des rails supérieur et inférieur, situées sur les flancs extérieurs des rails, en face de chacun des jeux de galets lorsque la fenêtre est fermée.

Selon un deuxième mode de réalisation les moyens aptes à absorber des déformations de la vitre comprennent au moins une pièce de compensation articulée sur le cadre par une liaison à rotule et portant l'un desdits jeux de galets.

Dans ce dernier cas, la pièce de compensation supporte de préférence le jeu de galets reçu dans le rail supérieur.

Avantageusement, dans le deuxième mode de réalisation de l'invention, le jeu de galets porté par la pièce de compensation comprend deux galets externes dont les axes sont fixes par rapport à ladite pièce et un galet central disposé de manière non symétrique entre les galets externes, l'axe du galet central étant mobile par rapport à ladite pièce, des premiers moyens élastiques sollicitant l'axe du galet central dans un état décalé par rapport à un plan contenant les axes des galets externes.

Dans ce dernier cas, la pièce de compensation supporte de préférence un organe de commande relié mécaniquement à l'axe du galet central de telle sorte qu'un actionnement de l'organe de commande permet d'amener l'axe du galet central dans le plan contenant les axes des galets externes, à l'encontre de l'action des premiers moyens élastiques.

Selon un autre aspect avantageux de l'invention, les moyens de verrouillage déverrouillage sont aptes à immobiliser la vitre par rapport à la structure de cockpit quelle que soit la position de ladite vitre (sauf lorsque le galet inférieur avant est reçu dans la partie avant, incurvée vers l'extérieur, du rail inférieur).

Les moyens de verrouillage déverrouillage comprennent alors avantageusement une crémaillère solidaire du rail inférieur et un cliquet relié mécaniquement à la poignée, de façon à être en prise avec la crémaillère lorsque l'organe de déverrouillage est relâché, pour interdire tout déplacement de la vitre vers l'avant par rapport à la structure de cockpit.

Dans les modes de réalisation préférés de l'invention, au moins l'un des jeux de galets comprend une roue apte à rouler sur le fond d'un premier des rails et deux galets sphériques ayant des axes de rotation perpendiculaires à celui de la roue, disposés de part et d'autre de celle-ci et aptes à rouler sur au plus l'un des flancs dudit premier rail.

Avantageusement, la poignée porte alors un doigt relié mécaniquement au bouton, et le cadre porte un verrou dans lequel le doigt est reçu pour immobiliser la poignée en rotation lorsque le bouton occupe sa position de verrouillage et lorsque la poignée est plaquée contre la vitre.

### BRÈVE DESCRIPTION DES DESSINS

On décrira à présent, à titre d'exemple illustratif et non limitatif, différents modes de réalisation préférés de l'invention, en se référant aux dessins annexés, dans lesquels :
La figure 1 est une vue de face d'une fenêtre de cockpit d'aéronef conforme à l'invention, observée de l'intérieur de l'aéronef ;
La figure 2 est une vue en perspective qui représente à plus grande échelle la partie basse de la fenêtre de la figure 1, également observée depuis l'intérieur de l'aéronef ;
La figure 3 est une vue en perspective comparable à la figure 2, qui représente à plus grande échelle la partie haute de la fenêtre, observée depuis l'intérieur de l'aéronef ;
La figure 4 est une vue en perspective, avec arrachement, qui représente à plus grande échelle la poignée articulée matérialisant l'organe de manoeuvre de la fenêtre de la figure 1, illustrée dans sa position repliée de verrouillage ;
La figure 5 est une vue comparable à la figure 4, qui représente la poignée dans sa position de déverrouillage ;
La figure 6 est une vue en perspective, observée du dessus, qui illustre un premier mode de réalisation d'un triangle de compensation interposé entre l'encadrement de la vitre et le rail supérieur ;
La figure 7 est une vue comparable à la figure 6, qui illustre un deuxième mode de réalisation du triangle de compensation ;
La figure 8 est une vue comparable aux figures 6 et 7, qui illustre un troisième mode de réalisation du triangle de compensation ;
La figure 9 est une vue comparable aux figures 6 à 8, qui illustre un quatrième mode de réalisation du triangle de compensation ; et
La figure 10 est une vue schématique qui représente l'un des jeux de galets par lesquels la vitre repose sur le rail inférieur, les éléments autres que les galets étant volontairement omis.

### EXPOSÉ DÉTAILLÉ DE MODES DE RÉALISATION PRÉFÉRÉS

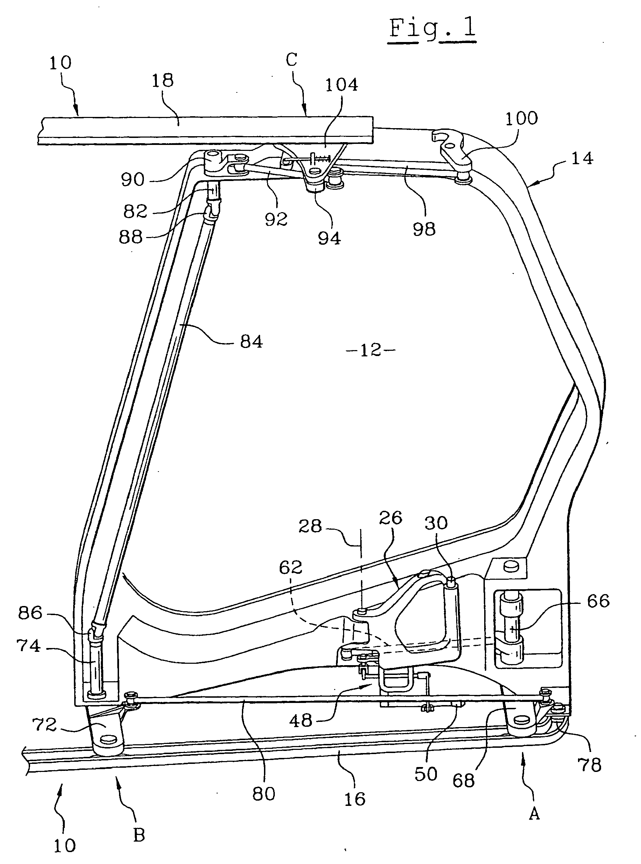

Comme l'illustre en particulier la figure 1, l'invention concerne une fenêtre latérale d'un cockpit d'aéronef. De manière classique, la fenêtre comprend une partie d'encadrement fixe 10, que l'on appellera "structure de cockpit" dans la suite du texte, ainsi qu'une vitre 12 munie d'un cadre rigide 14.

Bien que l'invention s'applique à tout type de fenêtre d'aéronef, elle est particulièrement adaptée au cas de fenêtres de grandes dimensions et présentant des formes complexes, à double courbure.

La vitre 12 et son cadre rigide 14 constituent un ensemble mobile apte à être manipulé par des personnes situées à l'intérieur du cockpit, sans assistance de puissance, pour assurer l'ouverture de la fenêtre. Celle-ci peut ainsi être utilisée comme issue de secours.

Les efforts de manoeuvre sont inférieurs à 22 Kg, conformément aux règlements en vigueur. Toutefois, l'effort de début de manoeuvre initial est, par exemple, supérieur à 10 Kg, pour éviter toute manoeuvre intempestive. Il est à noter que la manoeuvre de l'ensemble mobile est réalisable même en présence d'une différence de pression résiduelle de cabine liée à un mauvais fonctionnement du circuit de conditionnement d'air.

L'ensemble mobile de la fenêtre est conçu pour assurer l'étanchéité sous l'effet de la pression régnant dans la cabine de l'aéronef et de la pression aérodynamique extérieure, ainsi qu'en l'absence de différence de pression (par exemple sous la pluie).

Le cadre 14 de la fenêtre coopère avec la structure de cockpit 10 par des moyens de guidage en trois points A, B et C. Ces moyens de guidage assurent une liaison isostatique entre le cadre 14 et la structure de cockpit 10, tout en permettant l'ouverture de la fenêtre par un coulissement de la vitre 12 vers l'arrière, c'est-à-dire vers la gauche sur la figure 1.

Les moyens de guidage comprennent un rail inférieur 16 et un rail supérieur 18 qui font partie intégrante de la structure de cockpit 10 ainsi que trois jeux de galets 20, 22 et 24 liés au cadre 14 de la vitre 12 et matérialisant respectivement les trois points de liaison A, B, et C. Les deux jeux de galets 20 et 22 sont reçus dans le rail inférieur 16 et le troisième jeu de galets 24 est reçu dans le rail supérieur 18. Les axes des galets 20, 22 et 24 sont sensiblement perpendiculaires aux fonds des rails inférieurs et supérieurs.

En outre, comme on le voit sur la figure 1, le bord inférieur du cadre 14 de la vitre 12 porte, à son extrémité avant, un galet 78 dont l'axe vertical est monté directement sur ledit cadre.

De façon plus précise, le rail inférieur 16 comprend un chemin de roulement ouvert vers le haut et délimité par un fond, ainsi que par deux flancs verticaux parallèles espacés d'une distance supérieure au diamètre des galets des jeux de galets 20 et 22. De façon comparable, le rail supérieur 18 comprend un chemin de roulement ouvert vers le bas et délimité par un fond, ainsi que par deux flancs espacés d'une distance supérieure au diamètre des galets du jeu de galets 24.

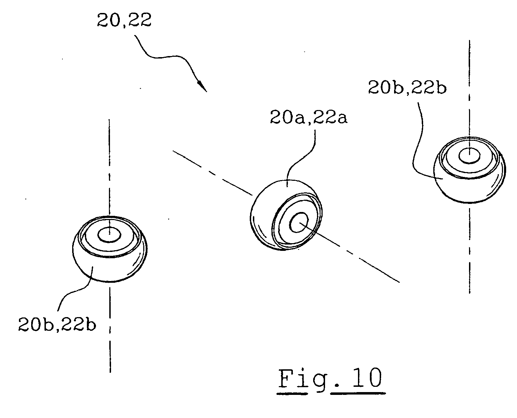

Dans un mode de réalisation avantageux de l'invention, illustré schématiquement sur la figure 10, l'un au moins des jeux de galets 20 et 22, par lesquels la vitre 12 repose sur le rail inférieur 16, comporte trois galets 20 et/ou 22, agencés de façon à assurer une fonction rotule. Ainsi, le jeu de galets 20 et/ou 22 comprend une roue centrale 20a, 22a, d'axe sensiblement parallèle au fond du rail 16, apte à rouler sur le fond du rail inférieur 16, ainsi que deux galets sphériques 20b, 22b disposés de part et d'autre de la roue centrale 20a, 22a. Les axes de rotation des galets sphériques 20b, 22b sont orientés selon une direction orthogonale à l'axe de la roue centrale 20a, 22a, c'est-à-dire selon des directions sensiblement perpendiculaires au fond du rail 16. Les galets sphériques 20b, 22b sont ainsi aptes à rouler sur au plus l'un des flancs du rail inférieur 16.

Conformément à un aspect de l'invention, les rails 16 et 18 ne sont pas obligatoirement parallèles. Ainsi, ces rails sont contenus dans deux plans parallèles mais peuvent former entre eux un angle non nul, inférieur ou égal à environ 10 degrés, de préférence 5 degrés.

Comme le montre également la figure 1, le chemin de roulement formé dans le rail inférieur 16 est rectiligne sur la majeure partie de sa longueur. Toutefois, ce chemin de roulement comporte une extrémité avant incurvée pratiquement à 90 degrés vers l'extérieur de l'avion.

Lorsque la fenêtre est fermée comme l'illustre la figure 1, le galet 78 est placé dans l'extrémité avant de la rainure formée dans le rail inférieur 16.

Avantageusement, les moyens de guidage du cadre 14 par rapport à la structure 10 du cockpit comprennent des moyens aptes à absorber les déformations de la structure mobile, c'est-à-dire de la vitre 12, par rapport à la structure fixe 10 du cockpit. Ces moyens sont conçus pour minimiser les contraintes appliquées sur les rails 16 et 18, de façon à éviter une fatigue de ces derniers, susceptible de conduire à l'apparition de criques, etc., notamment lors de la mise en pression de la cabine de l'avion, qui a tendance à écraser la vitre 12 et son cadre 14 sur la structure fixe 10.

Selon un premier mode de réalisation, ces moyens aptes à absorber les déformations de la vitre 12 comprennent des parties souples des rails inférieur 16 et supérieur 18, situées en face de chacun des trois jeux de galets 20, 22 et 24 lorsque la fenêtre est fermée comme l'illustre la figure 1. Ces parties souples peuvent notamment être réalisées dans un matériau présentant des caractéristiques d'élasticité supérieures à celles du matériau dans lequel est réalisée la majeure partie de chacun des rails (ce dernier matériau est généralement un métal tel que l'aluminium). Ainsi, les parties souples des rails peuvent notamment être réalisées en élastomère.

La fenêtre illustrée sur la figure 1 comprend de plus des moyens de verrouillage déverrouillage du cadre 14 par rapport à la structure de cockpit 10, ainsi qu'un organe de manoeuvre apte à commander un déplacement de la vitre 12 par rapport à la structure de cockpit 10, lorsque les moyens de verrouillage déverrouillage occupent un état déverrouillé.

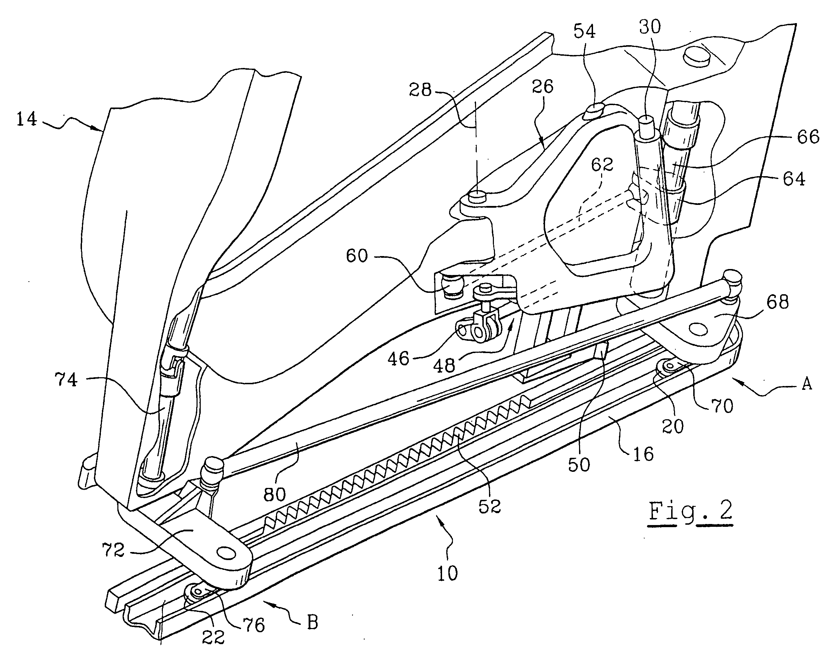

Dans le mode de réalisation préféré de l'invention illustré sur la figure 1, l'organe de manoeuvre est matérialisé par une poignée 26, articulée sur le montant inférieur du cadre 14 par un axe 28 de préférence sensiblement vertical. Plus précisément, l'axe d'articulation 28 est situé dans la partie centrale du cadre 14, sur la face dudit montant tournée vers l'intérieur de la cabine. Lorsque la fenêtre est fermée et verrouillée, la poignée 26 est rabattue vers l'avant de l'aéronef de façon à être plaquée contre la vitre, comme l'illustrent les figures 1 et 2.

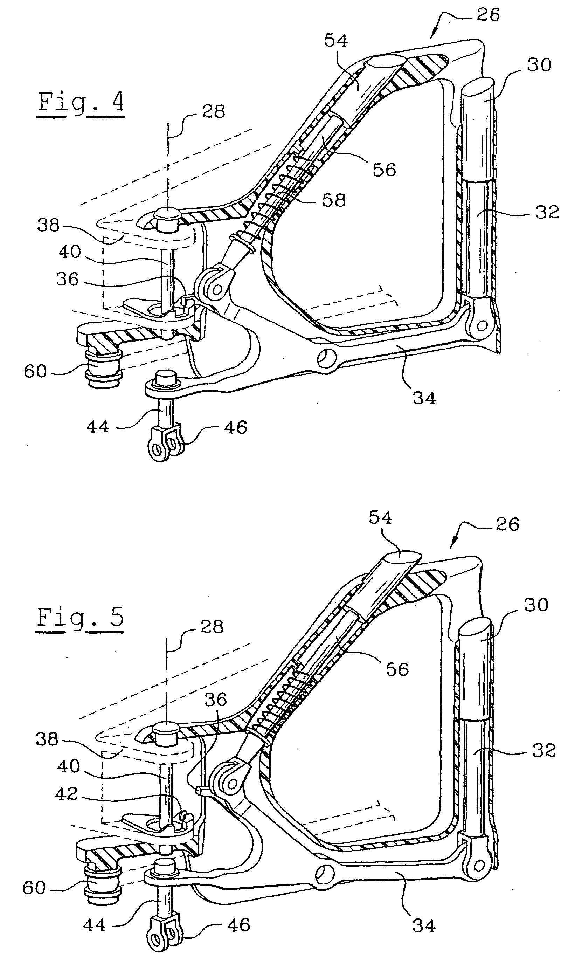

Conformément à l'invention et comme le montrent en particulier les figures 2, 4 et 5, les moyens de verrouillage déverrouillage comprennent un organe de déverrouillage porté par la poignée 26 et matérialisé, dans le mode de réalisation préféré de l'invention, par un bouton 30. Lorsque la poignée 26 est plaquée contre la vitre comme l'illustrent les figures 2 et 4, le bouton 30 fait saillie sur la poignée 26, de façon à pouvoir être aisément poussé avec le pouce par un opérateur qui saisit la poignée.

Les figures 4 et 5 représentent la poignée 26 dépourvue de son habillage extérieur, respectivement dans son état de verrouillage et dans son état de déverrouillage. On y voit les positions occupées par le mécanisme contenu dans la poignée dans l'un et l'autre de ces deux états.

L'axe de pivotement 28 de la poignée 26 est matérialisé par une chape 38 solidaire de la branche inférieure du cadre 14 et par un tourillon 40 solidaire de la poignée 26 et monté tournant dans la chape 38.

Dans le mode de réalisation représenté, le bouton 30 est constitué par l'extrémité haute d'une tige 32 reçue de façon coulissante dans une branche sensiblement verticale de la poignée 26, éloignée de l'axe de pivotement 28. A son extrémité basse, la tige 32 est articulée sur l'extrémité de l'un des bras d'un levier à trois bras 34, monté pivotant par sa partie centrale dans une branche inférieure de la poignée 26.

L'extrémité d'un autre bras du levier 34 porte un doigt 36 qui occupe respectivement une position basse (figure 4) et une position haute (figure 5), selon que le bouton 30 fait ou non saillie sur la poignée 26. Le doigt 36 est situé à proximité de l'axe de pivotement 28 de la poignée 26, juste au-dessus d'une plaque inférieure de la chape 38.

Dans sa partie située en vis-à-vis du doigt 36, la face supérieure de la plaque inférieure de la chape 38 comprend un verrou 42. Lorsqu'il est en position basse (figure 4), le doigt 36 pénètre dans le verrou 42, ce qui a pour effet d'immobiliser la poignée 26 en rotation. Au contraire, lorsque le doigt 36 est en position haute (figure 5), il est dégagé du verrou 42 et autorise un pivotement de la poignée 26 autour de son axe 28, ce qui provoque la mise en mouvement et donc l'ouverture de la fenêtre.

Le troisième bras du levier 34 porte à son extrémité une tige 44, sensiblement verticale, munie d'une chape 46 à son extrémité inférieure. Cette chape 46 est en prise sur un mécanisme 48 relié à un cliquet 50 à son extrémité opposée. Le cliquet 50 est situé en face d'une crémaillère 52 solidaire du rail inférieur 16 et orientée parallèlement à celui-ci.

De façon plus précise, le mécanisme 48 est conçu de façon telle qu'un déplacement de la chape 46 vers le haut ou vers le bas provoqué par un enfoncement ou un relâchement du bouton 30 se traduit respectivement par le désengagement ou par la venue en prise du cliquet 50 sur la crémaillère 52.

Lorsque le cliquet 50 est en prise sur la crémaillère 52, c'est-à-dire lorsque le bouton 30 est relâché, tout déplacement de la vitre 12 vers l'avant (c'est-à-dire vers la droite sur la figure 1) par rapport à la structure fixe 10 est empêché. En revanche, la vitre 12 peut se déplacer librement vers l'arrière. Cet agencement permet d'éviter de blesser une personne qui se pencherait par la fenêtre, dans le cas où un freinage de l'avion tend à déplacer la vitre vers l'avant.

Comme l'illustrent plus précisément les figures 4 et 5, la poignée 26 porte un organe 54 indicateur de non-verrouillage de la vitre 12. Plus précisément, l'organe 54 est fixé à l'extrémité d'une tige 56 montée de façon coulissante dans une branche avant inclinée de la poignée 26. A son extrémité opposée, la tige 56 est articulée à l'extrémité du bras du levier 34 qui porte le doigt 36.

Ainsi, lorsque le bouton 30 occupe la position de verrouillage de la fenêtre illustrée sur la figure 4, l'organe indicateur 54 est entièrement escamoté à l'intérieur de la poignée 26. Au contraire, lorsque le bouton 30 est enfoncé dans la position de déverrouillage de la fenêtre illustrée sur la figure 5, l'organe indicateur 54 fait saillie à l'extérieur de la poignée pour signaler aux opérateurs que la fenêtre n'est pas verrouillée.

Pour améliorer l'efficacité de l'organe indicateur 54, celui-ci est avantageusement coloré, par exemple en rouge.

Comme l'illustrent les figures 4 et 5, le mécanisme dont le déplacement est commandé par le bouton 30 intègre un ressort de rappel 58, agencé de façon telle que le bouton 30 fait normalement saillie sur la poignée lorsqu'il n'est pas actionné par un opérateur. Dans le mode de réalisation illustré sur les figures, le ressort de rappel 58 est placé autour de la tige 56, dans la branche avant inclinée de la poignée 26, et prend appui par ses extrémités respectivement sur un épaulement formé à l'intérieur de ladite branche et sur un épaulement formé sur la tige 56, à proximité du doigt 36.

Comme l'illustrent notamment les figures 2, 4 et 5, à l'opposé de la branche dans laquelle est monté le bouton 30 par rapport à son axe de pivotement 28, la poignée 26 comporte un bras horizontal muni d'un pivot vertical 60. Une extrémité d'une bielle 62 est articulée sur ce pivot 60. L'autre extrémité de la bielle 62 est articulée sur un levier 64 solidaire d'un axe 66 sensiblement vertical, monté tournant dans le montant avant du cadre 14 de la vitre 12. L'axe d'articulation de la bielle 62 sur le levier 64 est décalé vers l'extérieur de l'avion par rapport à l'axe 66.

Un deuxième levier 68 est solidaire de l'axe 66, juste au-dessus du rail inférieur 16. Un premier chariot 70 portant le premier jeu de galets 20 est monté pivotant sur la face inférieure du deuxième levier 68, par un axe sensiblement vertical décalé vers l'intérieur de l'avion par rapport à l'axe 66.

Dans sa partie inférieure, le bord arrière du cadre 14 de la vitre 12 supporte de façon pivotante un axe 74 sensiblement vertical. Un troisième levier 72 est solidaire de cet axe 74, à proximité immédiate du rail inférieur 16. Un deuxième chariot 76 portant le deuxième jeu de galets 22 est monté pivotant sur la face inférieure du troisième levier 72, par un axe sensiblement vertical décalé vers l'intérieur de l'avion par rapport à l'axe 74.

Une bielle 80 est articulée entre les leviers 68 et 72, en des emplacements décalés vers l'intérieur de l'avion par rapport à leurs axes 66 et 74. Cette bielle 80 a pour fonction de faire pivoter le levier 72 dans le même sens que le levier 68 lorsque l'axe 66 est entraîné en rotation par la bielle 62, sous l'effet d'un pivotement de la poignée 26.

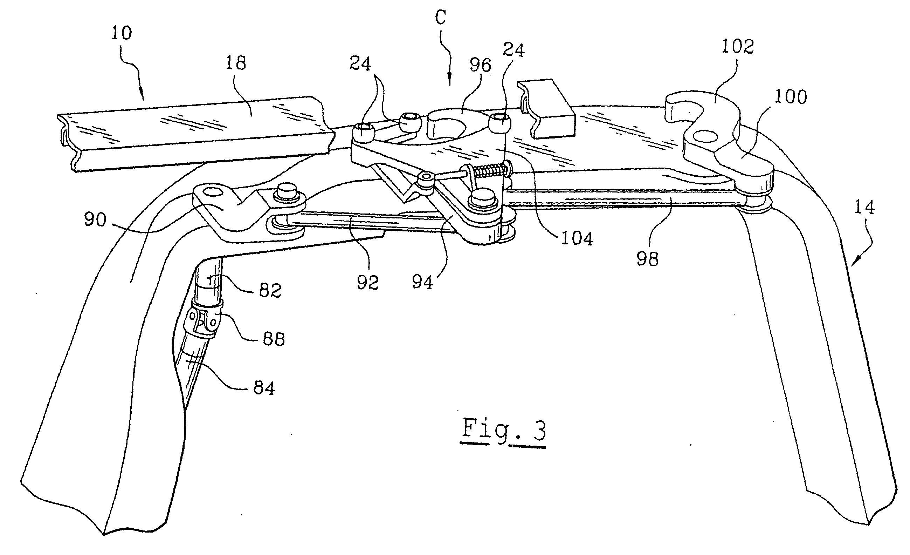

Comme l'illustrent notamment les figures 1 et 3, l'axe 74 portant le levier 72 est lié en rotation à un axe 82, sensiblement vertical, monté tournant à l'extrémité arrière du montant supérieur du cadre 14 de la vitre 12. Cette liaison en rotation est assurée par un arbre 84 cheminant le long du montant arrière du cadre 14 et dont les extrémités basse et haute sont respectivement en prise sur l'extrémité haute de l'axe 74 et sur l'extrémité basse de l'axe 82 par des joints de type Cardan 86 et 88.

Au-dessus du montant supérieur du cadre 14, l'axe 82 est solidaire d'un quatrième levier 90, orienté sensiblement à angle droit, par rapport au rail correspondant, vers l'intérieur de l'avion, comme les leviers 68 et 72, lorsque la poignée est rabattue vers l'avant contre la vitre 12, comme l'illustre la figure 1. Une première extrémité d'une bielle 92 est articulée à l'extrémité du quatrième levier 90. La bielle 92 chemine le long de la partie arrière du montant supérieur du cadre 14.

Comme l'illustre plus précisément la figure 3, l'autre extrémité de la bielle 92 est articulée à l'extrémité d'un cinquième levier 94, monté pivotant sur le montant supérieur du cadre 14, approximativement au milieu de celui-ci, par un axe sensiblement vertical non visible sur les figures. Comme les leviers 68, 72 et 90, le levier 94 est tourné vers l'intérieur de l'avion et orienté sensiblement à 90 degrés par rapport au rail supérieur 18 lorsque la poignée 26 est plaquée contre la vitre 12.

A l'opposé de la bielle 92 par rapport à son axe de pivotement, le levier 94 forme un crochet 96. Ce crochet 96 est placé entre le rail supérieur 18 et le montant supérieur du cadre 14. Il est prévu pour être en prise sur un doigt (non représenté) faisant saillie vers le bas à partir de la structure fixe 10 du cockpit lorsque la fenêtre est fermée et la poignée 26 plaquée vers l'avant contre la vitre 12.

Une première extrémité d'une bielle 98 est articulée sur le levier 94, à proximité de l'axe d'articulation de la bielle 92 sur ledit levier. Cette bielle 98 chemine le long de la partie avant du montant supérieur du cadre 14. Son extrémité avant est articulée à l'extrémité d'un cinquième levier 100, monté pivotant sur l'extrémité avant du montant supérieur du cadre 14. Comme les autres leviers décrits précédemment, le levier 100 est tourné vers l'intérieur de l'avion et orienté sensiblement à 90 degrés par rapport au rail supérieur 18 lorsque la poignée 26 est plaquée contre la vitre 12.

A l'opposé de la bielle 98 par rapport à son axe de pivotement, le levier 100 forme un crochet 102. Ce crochet 102 est placé entre le rail supérieur 18 et le montant supérieur du cadre 14. Il est prévu pour être en prise sur un doigt (non représenté) faisant saillie vers le bas à partir de la structure fixe 10 du cockpit lorsque la fenêtre est fermée et la poignée 26 plaquée vers l'avant contre la vitre 12.

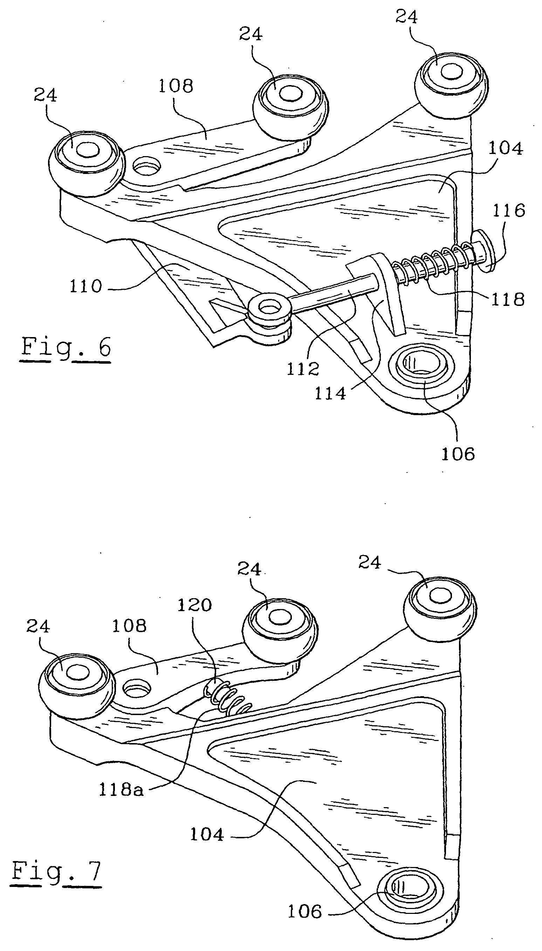

Comme l'illustrent les figures 3 et 6, dans le mode de réalisation représenté sur les figures, le jeu de galets 24 est porté par une plaque sensiblement triangulaire dite "pièce de compensation" 104. De façon plus précise, la pièce de compensation 104 est montée sur le levier 94, auquel elle est articulée par une rotule 106 montée à l'extrémité dudit levier. La pièce de compensation 104 est généralement sensiblement horizontale et elle est montée sur la rotule 106 par l'un des sommets du triangle formé par ladite pièce. Deux des galets 24 sont montés aux deux autres sommets de ce triangle, sur des axes sensiblement verticaux.

Un troisième galet 24 est monté à l'extrémité d'un levier 108, monté pivotant sur la pièce de compensation 104, à proximité de l'un des deux autres galets 24, par un axe sensiblement vertical. La longueur et l'orientation du levier 108 sont tels que les deux galets 24 portés directement par la pièce de compensation 104 sont disposés de façon non symétrique par rapport au troisième galet 24 monté sur le levier 108.

Il est à noter que l'utilisation d'au moins une pièce de compensation telle que la pièce 104 constitue une alternative à l'utilisation de parties souples sur les rails 16 et 18, en face des trois jeux de galets 20, 22 et 24, lorsque la fenêtre est fermée. En effet, une telle pièce de compensation associée à l'un au moins desdits jeux de galets constitue un moyen apte à absorber les déformations de la vitre 12, au même titre que les parties souples des rails. En effet, cet agencement permet d'assurer une absorption des déformations de la vitre 12 en garantissant le contact d'au moins l'un des galets tels que 24 sur chaque flanc du rail 16 ou 18 correspondant.

Dans le mode de réalisation illustré sur la figure 6, un levier 110 est solidaire de l'axe portant le levier 108, en dessous de la pièce de compensation 104. Ce levier forme approximativement un angle droit avec le levier 108 et une tige 112 est articulée à son extrémité. La tige 112 traverse une ouverture formée dans une oreille 114 solidaire de la face supérieure de la pièce de compensation 104, à proximité de la rotule 106. A son extrémité, la tige 112 est terminée par une collerette 116. Un ressort hélicoïdal de compression 118 est enroulé autour de la tige 112, de telle sorte que ses extrémités prennent respectivement appui contre l'oreille 114 et contre la collerette 116.

L'agencement qui vient d'être décrit permet de solliciter le galet intermédiaire 24 vers l'extérieur de l'avion, dans un état de non-alignement par rapport aux deux autres galets 24. Ainsi, lorsque les galets 24 sont reçus dans le chemin de roulement du rail supérieur 18, le galet intermédiaire 24 est normalement en appui contre le flanc de ce chemin tourné vers l'extérieur de l'avion alors que les deux autres galets 24 sont normalement en appui contre le flanc de ce chemin tourné vers l'intérieur de l'avion.

Il est également à noter que l'agencement qui vient d'être décrit permet de dégager manuellement les galets 24 du rail supérieur 18 en appuyant sur la collerette 116 formée à l'extrémité de la tige 112. En effet, cette opération permet d'aligner les trois galets 24 et de faire pivoter la pièce de compensation 104 vers le bas autour de la rotule 106, de façon à faire sortir les galets 24 du chemin de roulement défini par le rail supérieur 18.

La figure 7 illustre un autre mode de réalisation, dans lequel le levier 110, la tige 112, l'oreille 114 et le ressort 118 sont supprimés. Dans ce cas, un ressort hélicoïdal de compression 118a est interposé directement entre les bords en vis à vis du levier 108 et la pièce de compensation 104. Le maintien du ressort 118a est assuré par des saillies telles que 120 formées sur lesdits bords et sur lesquelles sont emboîtées les extrémités du ressort.

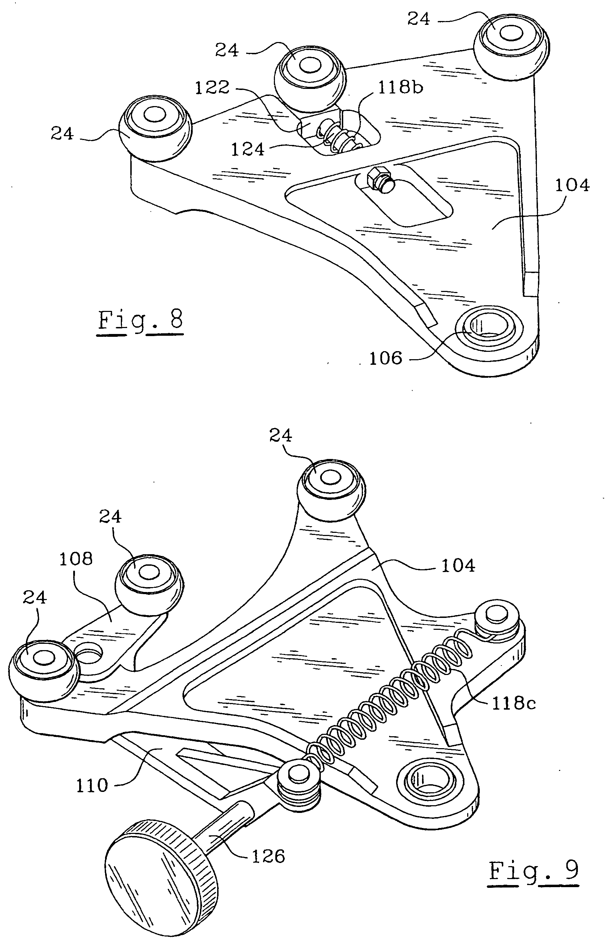

La figure 8 illustre encore un autre mode de réalisation de l'invention, dans lequel le galet intermédiaire 24 est monté sur un coulisseau 122 reçu dans une encoche prévue à cet effet dans le bord de la pièce de compensation 104 tourné ver l'extérieur de l'avion, entre les deux autres galets 24. Le coulisseau 122 est monté sur une tige de guidage 124 fixée à la pièce de compensation 104. Un ressort hélicoïdal de compression 118b est monté autour de la tige 124 de telle sorte que ses extrémités prennent appui respectivement sur le coulisseau 122 et sur la pièce de compensation 104.

Dans encore un autre mode de réalisation de l'invention illustré sur la figure 9, on retrouve les leviers pivotants 108 et 110 de la figure 6. Cependant la tige 112 et le ressort de compression 118 sont supprimés et remplacés par un ressort hélicoïdal de traction 118c dont les extrémités sont accrochées respectivement sur l'extrémité du levier 110 et sur la pièce de compensation 104, de telle sorte que le ressort 118c soit orienté sensiblement perpendiculairement au levier 110.

Une vis 126 munie d'une tête moletée est vissée dans le levier 110, de telle sorte que son extrémité puisse venir en appui contre un bord de la pièce de compensation 104 adjacent à ce levier 110. Un vissage manuel de la vis 126 permet ainsi de faire pivoter le levier 110 à l'encontre de l'action du ressort 118c, pour amener le galet intermédiaire 24 dans l'alignement des deux autres galets 24, lorsqu'on désire démonter la vitre

On décrira à présent le processus d'ouverture de la fenêtre, en se référant aux dessins annexés.

Lorsque la fenêtre est fermée, les leviers 68 et 72 forment pratiquement des angles droits avec le rail inférieur 16 et les leviers 90, 94 et 100 forment pratiquement des angles droits avec le rail supérieur 18. En outre, le galet 78 est logé dans l'extrémité avant, incurvée vers l'extérieur de l'avion, du chemin de roulement du rail inférieur 16. Par conséquent, la vitre 12 munie de son cadre rigide 14 est déportée au maximum vers l'extérieur de l'avion. L'étanchéité de la fermeture peut alors être assurée par des moyens appropriés (non représentés) interposés entre le cadre 14 et la structure de cockpit.

Lorsque l'opérateur presse le bouton 30 de la poignée 26, cela a pour effet de dégager le doigt 36 du verrou 42 et d'amener le cliquet 50 dans une position dans laquelle il n'est plus en prise sur la crémaillère 52. Cela autorise d'une part le pivotement de la poignée vers l'arrière et d'autre part le déplacement de la vitre 12 dans l'un et l'autre sens.

L'opérateur fait ensuite pivoter la poignée 26 vers l'arrière, ce qui a pour effet de déplacer d'abord la vitre 12 vers l'intérieur de l'avion, du fait de la forme de l'extrémité avant du chemin de roulement du rail inférieur 16, dans laquelle est reçu le galet 78, et par suite du pivotement simultané des leviers 68, 72, 90, 94 et 100 commandé par le mécanisme intégrant notamment les différentes bielles 62, 80, 92 et 98 et les axes 66, 74, 84 et 82.

Il est à noter que cette phase préliminaire du déplacement de la vitre 12 et de son cadre 14 s'accompagne d'un dégagement des crochets 96 et 102 par rapport aux doigts complémentaires (non représentés) prévus sur la structure fixe 10 du cockpit.

Lorsque cette première phase de déplacement est terminée, la poignée 26 fait approximativement un angle droit avec la vitre 12. Le déplacement de celle-ci sur les rails 16 et 18 est ensuite linéaire, vers l'arrière de l'avion.

Il est à noter que le maintien en position ouverte est alors assuré par un simple relâchement du bouton 30. En effet, le cliquet 50 revient alors en prise sur la crémaillère 52. Tout déplacement de la vitre 12 vers l'avant est donc impossible, ce qui permet de protéger d'un éventuel accident une personne qui se pencherait par la fenêtre lors d'un freinage de l'avion. Il est toutefois toujours possible d'augmenter l'ouverture de la fenêtre en déplaçant encore la vitre 12 vers l'arrière.

Le déplacement de la vitre 12 et de son cadre 14 vers l'arrière de l'avion est rendu possible, malgré la forme éventuellement complexe et non développable de la vitre 12 et l'absence de parallélisme entre les rails 16 et 18, grâce au caractère isostatique de la liaison cadre 14 rails 16, 18 et à la présence de la pièce de compensation 104 reliée au levier 94 par une rotule 106.

La pièce de compensation 104 matérialise ainsi des moyens aptes à absorber des déformations de la vitre 12, éventuellement non homogènes sur la surface de la vitre, dus à des phénomènes tels qu'un différentiel de pression entre les faces intérieure et extérieure ou tels que des variations de température, etc..

Le regroupement de toutes les commandes (déverrouillage de la vitre, ouverture de la vitre, verrouillage de la vitre en position ouverte ou semi-ouverte) sur la poignée 26 permet d'offrir à l'utilisateur une ergonomie optimisée. L'ergonomie est encore améliorée en orientant l'axe de la poignée selon une direction sensiblement verticale, comme représenté.

## Revendications

1. Fenêtre d'aéronef, comprenant une structure (10) de cockpit, une vitre (12) munie d'un cadre rigide (14), des moyens de guidage en trois points (A, B, C) du cadre (14) par rapport à la structure (10) de cockpit, des moyens de verrouillage déverrouillage (50, 52), agissant entre le cadre (14) et la structure (10) de cockpit et un organe de manoeuvre (26) apte à commander les moyens de verrouillage déverrouillage (50, 52) et un déplacement de la vitre (12) par rapport à la structure (10) de cockpit lorsque les moyens de verrouillage déverrouillage (50, 52) occupent un état déverrouillé, **caractérisé en ce que** les moyens de verrouillage déverrouillage (50, 52) sont aptes à bloquer un mouvement de coulissement de la vitre (12) le long d'un rail de guidage (16) et sont commandés par un organe de déverrouillage (30) porté par l'organe de manoeuvre (26).

2. Fenêtre selon la revendication 1, dans laquelle l'organe de manoeuvre est une poignée (26) articulée sur le cadre (14) et l'organe de déverrouillage est un bouton (30) placé sur la poignée (26) et rappelé élastiquement vers une position de verrouillage.

3. Fenêtre selon la revendication 2, dans laquelle la poignée (26) est articulée sur le cadre (14) par un axe (28) sensiblement vertical.

4. Fenêtre selon l'une quelconque des revendications 2 et 3, dans laquelle la poignée (26) est apte à pivoter vers l'arrière sur le cadre rigide (14) à partir d'une position plaquée contre la vitre (12).

5. Fenêtre selon l'une quelconque des revendications 2 à 4, dans laquelle un organe (54) indicateur de non-verrouillage est placé sur la poignée (26), ledit organe (54) étant relié mécaniquement au bouton (30) de façon à faire saillie sur la poignée (26) de manière visible lorsque le bouton (30) occupe une position de déverrouillage.

6. Fenêtre selon l'une quelconque des revendications précédentes, dans laquelle les moyens de guidage comprennent un rail supérieur (18) et un rail inférieur (16) appartenant à la structure (10) de cockpit, un jeu de galets (24) reçu dans le rail supérieur (18) et deux autres jeux de galets (20, 22) reçus dans le rail inférieur (16), lesdits jeux de galets (20, 22, 24) étant montés sur le cadre (14).

7. Fenêtre selon la revendication 6, dans laquelle le rail supérieur (18) et le rail inférieur (16) forment entre eux un angle non nul au plus égal à environ 5 degrés.

8. Fenêtre selon l'une quelconque des revendications 6 et 7, dans laquelle les moyens de guidage comprennent des moyens aptes à absorber des déformations de la vitre.

9. Fenêtre selon la revendication 8, dans laquelle les moyens aptes à absorber des déformations de la vitre comprennent des parties souples des rails supérieur (18) et inférieur (16), situées en face de chacun des jeux de galets (20, 22, 24) lorsque la fenêtre est fermée.

10. Fenêtre selon la revendication 8, dans laquelle les moyens aptes à absorber des déformations de la vitre (12) comprennent au moins une pièce de compensation (104) articulée sur le cadre (14) par une liaison à rotule (106) et portant l'un (24) desdits jeux de galets.

11. Fenêtre selon la revendication 10, dans laquelle la pièce de compensation (104) supporte le jeu de galets (24) reçu dans le rail supérieur (18).

12. Fenêtre selon l'une quelconque des revendications 10 et 11, dans laquelle le jeu de galets (24) porté par la pièce de compensation (104) comprend deux galets externes dont les axes sont fixes par rapport à ladite pièce (104)et un galet central disposé de manière non symétrique entre les galets externes, l'axe du galet central étant mobile par rapport à ladite pièce (104), des premiers moyens élastiques (118, 118a, 118b, 118c) sollicitant l'axe du galet central dans un état décalé par rapport à un plan contenant les axes des galets externes.

13. Fenêtre selon la revendication 12, dans laquelle la pièce de compensation (104) supporte un organe de commande (116) relié mécaniquement à l'axe du galet central de telle sorte qu'un actionnement de l'organe de commande (116) permet d'amener l'axe du galet central dans le plan contenant les axes des galets externes, à l'encontre de l'action des premiers moyens élastiques (118, 118a, 118b, 118c).

14. Fenêtre selon l'une quelconque des revendications précédentes, dans laquelle les moyens de verrouillage déverrouillage sont aptes à immobiliser la vitre (12) par rapport à la structure (10) de cockpit quelle que soit la position de ladite vitre (12).

15. Fenêtre selon la revendication 14, combinée avec l'une quelconque des revendications 6 à 13, dans laquelle les moyens de verrouillage déverrouillage comprennent une crémaillère (52) solidaire du rail inférieur (16) et un cliquet (50) relié mécaniquement à la poignée (26), de façon à être en prise avec la crémaillère (52) lorsque l'organe de déverrouillage (30) est relâché, pour interdire alors tout déplacement de la vitre (12) vers l'avant par rapport à la structure (10) de cockpit.

16. Fenêtre selon l'une quelconque des revendications 6 à 15, dans laquelle au moins l'un (20, 22) des jeux de galets comprend une roue (20a, 22a) apte à rouler sur le fond d'un premier (16) des rails et deux galets sphériques (20b, 22b) ayant des axes de rotation perpendiculaires à celui de la roue (20a, 22a), disposés de part et d'autre de celle-ci et aptes à rouler sur au plus l'un des flancs dudit premier rail (16).

17. Fenêtre selon l'une quelconque des revendications précédentes, dans laquelle l'organe de manoeuvre (26) porte un doigt (36) relié mécaniquement à l'organe de verrouillage (30), et le cadre (14) porte un verrou (42) dans lequel le doigt (36) est reçu pour immobiliser l'organe de manoeuvre (26) en rotation lorsque l'organe de verrouillage (30) occupe sa position de verrouillage et lorsque l'organe de manoeuvre (26) est plaqué contre la vitre (12).

## Patentansprüche

1. Luftfahrzeugfenster mit einer Cockpit-Struktur (10), einer mit einem starren Rahmen (14) versehenen Fensterscheibe (12), Mitteln zum Führen des Rahmens (14) an drei Punkten (A,B,C) in bezug auf die Cockpit-Struktur (10), Verriegelungs-Entriegelungsmittel (50,52), die zwischen dem Rahmen (14) und der Cockpit-Struktur (10) wirken, sowie ein Betätigungselement (26), das die verriegelungs-Entriegelungsmittel (50,52) sowie eine Verschiebung der Fensterscheibe (12) in bezug auf die Cockpit-Struktur (10) steuern kann, wenn die Verriegelungs-Entriegelungsmittel (50,52) einen Entriegelungszustand einnehmen, **dadurch gekennzeichnet, dass** die Verriegelungs-Entriegelungsmittel (50,52) eine Gleit- bzw. Verschiebebewegung der Fensterscheibe (12) längs einer Führungsschiene (16) blockieren können und von einem von dem Betätigungselement (26) getragenen Entriegelungselement (30) gesteuert sind.

2. Fenster nach Anspruch 1, wobei das Betätigungselement ein mit dem Rahmen (14) gelenkig verbundener Handgriff (26) ist und das Entriegelungselement ein an dem Handgriff (26) angebrachter Knopf (30) ist, der elastisch zu einer Verriegelungsposition hin vorbelastet ist.

3. Fenster nach Anspruch 2, wobei der Handgriff (26) durch eine im wesentlichen vertikale Achse (28) mit dem Rahmen (14) gelenkig verbunden ist.

4. Fenster nach einem der Ansprüche 2 oder 3, wobei der Handgriff (26) an dem starren Rahmen (14) von einer an der Fensterscheibe (12) anliegenden Position nach hinten schwenken kann.

5. Fenster nach einem der Ansprüche 2 bis 4, wobei ein Element (54) zum Anzeigen der Entriegelung an dem Handgriff (26) angeordnet ist, wobei das Element (54) mechanisch mit dem Knopf (30) derart verbunden ist, dass es am Handgriff (26) auf sichtbare Weise vorsteht, wenn der Knopf (30) eine Entriegelungsposition einnimmt.

6. Fenster nach einem der vorangehenden Ansprüche, wobei die Führungsmittel eine obere Schiene (18) und eine untere Schiene (16) umfassen, die zur Cockpit-Struktur (10) gehören, ein in die obere Schiene (18) aufgenommenes Laufrollenpaar (24) und zwei weitere, in die untere Schiene (16) aufgenommene Laufrollenpaare (20,22), wobei die Laufrollenpaare (20,22,24) am Rahmen (14) angebracht sind.

7. Fenster nach Anspruch 6, wobei die obere Schiene (18) und die untere Schiene (16) untereinander einen Winkel ungleich Null und höchstens gleich etwa fünf Grad bilden.

8. Fenster nach einen der Ansprüche 6 oder 7, wobei die Führungsmittel Mittel aufweisen, die Verformungen der Fensterscheibe ausgleichen können.

9. Fenster nach Anspruch 8, wobei die Mittel, welche Verformungen der Fensterscheibe ausgleichen können, elastische bzw. nachgiebige Abschnitte der oberen Schienen (18) und unteren Schienen (16) umfassen, die sich gegenüber jedem der Laufrollenpaare ((20,22,24) befinden, wenn das Fenster geschlossen ist.

10. Fenster nach Anspruch 8, wobei die Mittel, welche Verformungen der Fensterscheibe (12) ausgleichen können, mindestens ein Ausgleichsstück (104) umfassen, das mit dem Rahmen (14) über eine Kugelgelenkverbindung (106) gelenkig verbunden ist und eines (24) der Laufrollenpaare trägt.

11. Fenster nach Anspruch 10, wobei das Ausgleichsstück (104) das in die obere Schiene (18) aufgenommene Laufrollenpaar (24) trägt bzw. haltert.

12. Fenster nach einem der Ansprüche 10 oder 11, wobei das von dem Ausgleichsstück (104) getragene Laufrollenpaar (24) zwei äußere Laufrollen umfasst, deren Achsen in bezug auf das Stück (104) feststehen, sowie eine mittlere Laufrolle, die auf nicht symmetrische Weise zwischen den äußeren Laufrollen angeordnet ist, wobei die Achse der mittleren Laufrolle in Bezug auf das Stück (104) beweglich ist, und erste elastische Mittel (118,118a,118b,118c) die Achse der mittleren Laufrolle in einem in bezug auf eine die Achsen der äußeren Laufrollen enthaltende Ebene versetzten Zustand vorbelastet.

13. Fenster nach Anspruch 12, wobei das Ausgleichsstück (104) ein Steuerelement (116) trägt, das mit der Achse der zentralen Laufrolle derart mechanisch verbunden ist, dass eine Betätigung des Steuerelements (116) ermöglicht, die Achse der zentralen Laufrolle in der die Achsen der äußeren Laufrollen enthaltenden Ebene gegen die Wirkung der ersten elastischen Mittel (118,118a, 118b,118c) zu bewegen.

14. Fenster nach einen der vorangehenden Ansprüche, wobei die verriegelungs-Entriegelungsmittel die Fensterscheibe (12) in bezug auf die Cockpit-Struktur (10) unabhängig von der Position der Fensterscheibe (12) feststellen können.

15. Fenster nach Anspruch 14 in Kombination mit einem der Ansprüche 6 bis 13, wobei die Verriegelungs-Entriegelungsmittels eine Zahnstange (53) umfassen, die mit einer unteren Schiene (16) einstückig bzw. fest verbunden ist, sowie eine mechanisch mit dem Handgriff (26) verbundene Klinke (50), so dass diese in Eingriff mit der Zahnstange (52) steht, wenn das Entriegelungselement (30) freigegeben ist, um dabei jegliche Vorwärtsbewegung der Fensterscheibe (12) in bezug auf die Cockpit-Struktur (10) zu unterbinden.

16. Fenster nach einem der Ansprüche 6 bis 15, wobei mindestens eines (20,22) der Laufrollenpaare ein Rad (20a,22a) aufweist, das am Boden bzw. der Unterseite einer ersten (16) der Schienen rollen kann, sowie zwei sphärische Laufrollen (20b,22b) mit Drehachsen senkrecht zu derjenigen des Rades (20a,22a), die auf dessen beiden Seiten angeordnet sind und höchsten auf einer der Flanken der ersten Schiene (16) rollen können.

17. Fenster nach einem der vorangehenden Ansprüche, wobei das Betätigungselement (26) einen mit dem Verriegelungselement (30) mechanisch verbundenen Finger (36) trägt und der Rahmen (14) einen Riegel (42) trägt, in den der Finger (36) aufgenommen wird, um das Betätigungselement (26) in seiner Drehung festzustellen, wenn das Verriegelungselement (30) seine Verriegelungsposition einnimmt und wenn das Betätigungselement (26) an der Fensterscheibe (12) anliegt.

## Claims

1. Aircraft window comprising a cockpit structure (10), a window pane (12) provided with a rigid frame (14), three-point (A, B, C) guide means for guiding the frame (14) with respect to the cockpit structure (10), means of locking/unlocking the frame (14) with respect to the cockpit structure (10) and a control device (26) to control displacement of the window pane (12) with respect to the cockpit structure 10) when the locking/unlocking means are in an unlocked state, **characterized in that** the locking/unlocking means are able to block a sliding movement of the window pane (12) along a guide rail (16) and are controlled by an unlocking device (30) supported on the control device (26).

2. Window according to claim 1, in which the control device is a handle (26) articulated on the frame (14) and the unlocking device is a button (30) placed on the handle (26) and elastically returned to a locking position.

3. Window according to claim 2, in which the handle (26) is articulated on the frame (14) about an approximately vertical hinge pin (28).

4. Window according to either of claims 2 and 3, in which the handle (26) is free to pivot backwards on the rigid frame (14) starting from a position in contact with the window pane (12).

5. Window according to any one of claims 2 to 4, in which an unlocking indicator device (54) is placed on the handle (26), the said device (54) being mechanically connected to the button (30) so that it projects outwards on the handle (26) and is clearly visible when the button (30) is in an unlocking position.

6. Window according to any one of the above claims, in which the guide means comprise a top rail (18) and a bottom rail (16) belonging to the cockpit structure (10), a set of rollers (24) that fit into the top rail (18) and two other sets of rollers (20, 22) that fit into the bottom rail (16), the said sets of rollers (20, 22, 24) being installed on the frame (14).

7. Window according to claim 6, in which there is a non-zero angle between the top rail (18) and the bottom rail (16) equal to not more than about 5 degrees.

8. Window according to either of claims 6 and 7, in which the guide means comprise means of absorbing deformations of the window pane.

9. Window according to claim 8, in which the means capable of absorbing deformations of the window pane comprise flexible parts of the top (18) and bottom (16) rails located facing each set of rollers (20, 22, 24) when the window is closed.

10. Window according to claim 8, in which the means used to absorb deformations of the window pane (12) comprise at least one compensation part (104) articulated on the frame (14) by a ball joint connection (106) and supporting one (24) of the said sets of rollers.

11. Window according to claim 10, in which the compensation part (104) supports the set of rollers (24) that fit into the top rail (18).

12. Window according to either of claims 10 and 11, in which the set of rollers (24) supported by the compensation part (104) comprises two external rollers for which the spindles are fixed with respect to the said part (104) and a central roller placed non-symmetrically between the external rollers, the spindle of the central roller being free to move with respect to the said part (104), the first elastic means (118, 118a, 118b, 118c) applying forces to the spindle of the central roller in a state offset from a plane containing the spindles of the external rollers.

13. Window according to claim 12, in which the compensation part (104) supports a control device (116) mechanically connected to the spindle of the central roller such that actuating the control device (116) provides a means of bringing the spindle of the central roller into the plane containing the spindles of the external rollers, opposing the action of the first elastic means (118, 118a, 118b, 118c).

14. Window according to any one of the above claims, in which the locking / unlocking means are capable of immobilizing the window pane (12) with respect to the cockpit structure (10) regardless of the position of the said window pane (12).

15. Window according to claim 14, combined with any one of claims 6 to 13, in which the locking /unlocking means then comprise a rack (52) fixed to the bottom rail (16) and a ratchet (50) mechanically connected to the handle (26), so that it engages with the rack (52) when the unlocking device (30) is released, to prevent any forwards movement of the window pane (12) with respect to the cockpit structure (10).

16. Window according to any one of claims 6 to 15, in which at least one (20, 22) of the sets of rollers comprises a wheel (20a, 22a) that can roll on the bottom of a first (16) of the rails and two spherical rollers (20b, 22b) with rotation axes perpendicular to the rotation axis of the wheel (20a, 22a), placed on each side of the wheel and capable of rolling on not more than one of the sides of the said first rail (16).

17. Window according to any one of the above claims, in which the control device (26) supports a pin (36) mechanically connected to the locking device (30), and the frame (14) is fitted with a lock (42) in which the pin (36) fits to fix the rotational position of the control device (26) when the locking device (30) returns to its locking position and when the control device (26) is in contact with the window pane (12):
